Europäisches Patentamt

European Patent Office

Office européen des brevets

(19)

(11) Numéro de publication: **0 286 549**
**A1**

(12) **DEMANDE DE BREVET EUROPEEN**

(21) Numéro de dépôt: 88420096.5

(22) Date de dépôt: 23.03.88

(51) Int. Cl.⁴: **B 62 K 19/34**

(30) Priorité: 31.03.87 FR 8704768

(43) Date de publication de la demande:
12.10.88 Bulletin 88/41

(84) Etats contractants désignés:
AT BE CH DE ES GB GR IT LI LU NL SE

(71) Demandeur: **S.A. BARDON**
**Saint Maurice de Lignon**
**F-43200 Yssingeaux (FR)**

(72) Inventeur: **Bardon, Claudius**
**Saint Maurice de Lignon**
**F-43200 Yssingeaux (FR)**

(74) Mandataire: **Dupuis, François**
**Cabinet Charras 3 Place de l'Hôtel-de-Ville BP 203**
**F-42005 St. Etienne Cédex 1 (FR)**

(54) **Jeu de pédalier pour bicyclettes et véhicules similaires.**

(57) Le jeu de pédalier selon l'invention présente un ensemble (E1 ou E2) de guidage et de retenue des billes (2) qui est directement assemblé avec l'axe (1) avant montage dans un alésage lisse (B1) d'une boîte de pédalier (B), où ledit ensemble est positionné au moyen d'un ou deux contre-écrous (5, 6, 10) coopérant avec ledit alésage et ledit ensemble.

FIG.1

# Description

## Jeu de pédalier pour bicyclettes et véhicules similaires.

Les jeux de pédalier du type comprenant un axe porte-manivelles épaulé en deux zones espacées pour former à l'extérieur des chemins de roulement pour des billes, sont soit assemblés pièce par pièce avec la boîte de pédalier, soit assemblés en partie avant montage dans ladite boite, comme cela est prévu dans la demande en France n° 2.573.141.

D'autre part, dans ces types de jeux de pédaliers préassemblés en partie, il n'est pas possible d'effectuer un réglage transversal de l'axe par rapport à la boîte de pédalier afin notamment, d'obtenir le positionnement précis du plateau avec la ligne de chaîne.

Un des buts de l'invention a été de concevoir un jeu du pédalier de conception économique et très rapide à monter dans la boîte de pédalier.

Selon un autre but, on a voulu pouvoir régler transversalement l'axe porte-manivelles par rapport à la boîte de pédalier.

Pour résoudre le problème posé d'obtenir un montage rapide du jeu de pédalier avec la possibilité de le règler transversalement par rapport au boitier de pédalier ; le jeu de pédalier, selon l'invention, est formé d'éléments de guidage et de retenue des billes sur l'axe porte-manivelles qui sont conçus pour être totalement assemblés entre eux et avec ledit axe, avant montage dans l'alésage lisse d'une boîte de pédalier, où l'ensemble ainsi constitué, est positionné transversalement de manière règlable par écrou et contre-écrou coopérant avec ledit alésage et ledit ensemble.

Dans une première forme de réalisation, le problème posé est avantageusement résolu par le fait que l'ensemble de retenue et de guidage des billes sur l'axe comprend d'un côté une cuvette à billes et de l'autre un manchon dont le fond reçoit les billes, tandis que l'extrémité opposée est évasée et coopère avec la cuvette par vissage.

Cet ensemble axe-billes-cuvette-manchon est engagé dans l'alésage de la boîte de pédalier par l'extrémité évasée du manchon, tandis qu'à l'opposé un contre-écrou épaulé est vissé autour du fond du manchon avec sa portée cylindrique engagée dans l'alésage.

D'autre part, après montage de l'ensemble dans l'alésage de la boîte de pédalier, ledit ensemble est réglé en position par action sur le contre-écrou et un autre contre-écrou vissé sur la cuvette.

Dans une autre form de réalisation, pour résoudre le problème posé, le jeu de pédalier est remarquable en ce que l'ensemble de retenue et de guidage des billes sur l'axe comprend deux cuvettes à billes reliées entre elles par vissage des extrémités évasées d'un manchon, et en ce que l'ensemble axe-billes-cuvettes-manchon est engagé dans l'alésage de la boîte de pédalier par les extrémités évasées du manchon, jusqu'en butée d'un épaulement de la cuvette contre ladite boîte, tandis qu'à l'opposé, un contre-écrou épaulé positionne l'ensemble dans ladite boîte.

Ces caractéristiques et d'autres encore ressortiront de la description qui suit.

Pour fixer l'objet de l'invention sans toutefois le limiter, dans le dessin annexé :
- la figure 1 est une vue en coupe illustrant une première forme de réalisation du jeu de pédalier selon l'invention,
- la figure 2 est une vue en coupe illustrant une deuxième forme de réalisation du jeu de pédalier selon l'invention.

Afin de rendre plus concret l'objet de l'invention, on le décrit maintenant sous des formes non limitatives de réalisation illustrées aux figures du dessin.

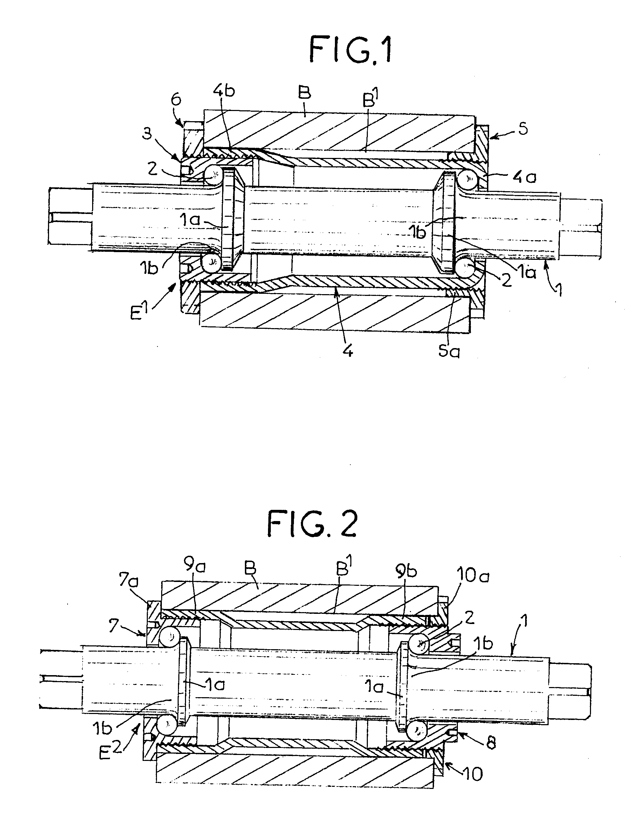

Selon la figure 1, le jeu de pédalier comprend un axe (1) dont les extrémités sont équipées de manière connue pour monter et fixer angulairement des manivelles, et qui présente suivant deux zones espacées, des épaulements (1a) raccordés du côté extérieur par des arrondis (1b) constituant des chemins de roulement pour des billes (2).

D'un côté, les billes sont retenues par le fond d'une cuvette à billes (3) qui est filetée extérieurement, tandis que de l'autre côté, les billes sont retenues par le fond (4a) d'un manchon (4) dont l'autre extrémité évasée (4b) est filetée intérieurement pour se visser sur la partie filetée de la cuvette (3).

L'ensemble (E1) axe-billes-cuvette-manchon ainsi composé est engagé par la portée cylindrique de l'extrémité évasée (4a) du manchon, dans l'alesage (B1) de la boîte de pédalier (B) et il y est alors positionné par un contre-écrou épaulé (5) qui est vissé par son alésage taraudé sur une portée taraudée du manchon, tandis que la portée extérieure (5a) dudit contre-écrou sert de palier à l'ensemble (en complément de la portée évasée (4b)) en s'engageant dans l'alésage (B1).

Le réglage transversal de l'ensemble dans la boîte de pédalier s'opère en vissant plus ou moins le contre-écrou (5) et, une fois le réglage réalisé, un deuxième contre-écrou (6) est vissé sur la portée filetée de la cuvette (3) jusqu'en butée contre la boîte de pédalier.

En agissant sur l'un ou l'autre des contre-écrous, on peut ainsi régler commodément la position transversale de l'axe par rapport à la boîte de pédalier.

Selon la réalisation illustrée à la figure 2, l'axe (1) est de même conception que le précédent. Dans ce cas, les billes (2) sont retenues pour chaque chemin de roulement (1b) par des cuvettes à billes (7 et 8) qui sont reliées entre elles par un manchon (9) comprenant à cet effet deux extrémités évasées (9a-9b) filetées intérieurement pour se visser sur les portées filetées correspondantes des cuvettes.

L'ensemble (E2) axe-billes-cuvettes-manchon ainsi composé est engagé dans l'alésage (B1) de la boîte de pédalier par les portées évasées (9a-9b) du manchon jusqu'en butée d'un épaulement (7a) de la cuvette (7). A l'opposé, un contre-écrou (10) également épaulé en (10a), est vissé sur la portée filetée de la cuvette (8) pour positionner l'ensemble dans la boîte de pédalier.

Les avantages ressortent bien de la description. On souligne encore la réalisation économique, le montage par assemblage préalable de l'axe, des billes et des éléments fixes de retenue et de cheminement des billes, et le réglage transversal de l'ensemble par rapport à la boîte de pédalier.

## Revendications

- 1 - Jeu de pédalier pour bicyclettes et véhicules similaires, du type comprenant un axe (1) porte-manivelles épaulé en deux zones espacées (1a) pour former à l'extérieur des chemins de roulement (1b) pour des billes (2), caractérisé en ce qu'il est formé d'éléments de guidage et de retenue des billes sur l'axe porte-manivelles, qui sont conçus pour être totalement assemblés entre eux et avec ledit axe, avant montage dans l'alésage lisse (B.1) d'une boîte de pédalier (B) où l'ensemble ainsi constitué (E1 ou E2) est positionné transversalement de manière réglable par écrou et contre-écrou (5, 6 ou 10) coopérant avec ledit alésage et ledit ensemble.

- 2 - Jeu de pédalier selon la revendication 1, caractérisé en ce que l'ensemble (E1) de retenue et de guidage des billes (2) sur l'axe (1) comprend d'un côté une cuvette à billes (3) et de l'autre un manchon (4) dont le fond (4a) reçoit les billes, tandis que l'extrémité opposée (4b) est évasée et coopère avec la cuvette (3) par vissage.

- 3 - Jeu de pédalier selon les revendications 1 et 2 ensemble, caractérisé en ce que l'ensemble (E1) axe-billes-cuvette-manchon est engagé dans l'alésage (B1) de la boîte de pédalier (B) par l'extrémité évasée (4b) du manchon, tandis qu'à l'opposé un contre-écrou épaulé (5) est vissé autour du fond (4a) du manchon (4) avec sa portée cylindrique (5a) engagée dans l'alésage (B1).

- 4 - Jeu de pédalier selon la revendication 3, caractérisé en ce que, après montage de l'ensemble (E1) dans l'alésage (B1) de la boîte de pédalier, ledit ensemble est réglé en position par action sur le contre-écrou (5) et un autre contre-écrou (6) vissé sur la cuvette (3).

- 5 - Jeu de pédalier selon la revendication 1, caractérisé en ce que l'ensemble (E2) de retenue et de guidage des billes (2) sur l'axe (1) comprend deux cuvettes à billes (7 et 8) reliées entre elles par vissage des extrémités évasées (9a) (9b) d'un manchon (9).

- 6 - Jeu de pédalier selon les revendications 1 et 5 ensemble, caractérisé en ce que l'ensemble (E2) axe-billes-cuvettes-manchon est engagé dans l'alésage (B1) de la boîte de pédalier (B) par les extrémités évasées (9a-9b) du manchon, jusqu'en butée d'un épaulement (7a) de la cuvette (7) contre ladite boîte, tandis qu'à l'opposé, un contre-écrou épaulé (10) positionne l'ensemble dans ladite boîte.

## FIG.1

## FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 573 141  (THUN)<br>* Figures 1-3; page 2, ligne 31 - page 3, ligne 99 *<br>--- | 1-4 | B 62 K  19/34 |
| A | DE-U-8 415 161  (THUN)<br>* Figures 1-3; page 18, ligne 17 - page 26, ligne 6 *<br>--- | 1 | |
| A | FR-A-2 327 918  (SHIMANO)<br>* Figures 1-3; page 3, ligne 6 - page 6, ligne 29 *<br>--- | 5 | |
| A | GB-A-2 135 399  (THUN)<br>* Figures 1,2; page 2, ligne 50 - page 3, ligne 15 *<br>--- | 1 | |
| A | GB-A-2 002 089  (SHIMANO)<br>* Figures 1-10; page 2, ligne 34 - page 4, ligne 22 *<br>----- | 1 | |

DOMAINES TECHNIQUES RECHERCHES (Int. Cl.4)

B 62 K

Le présent rapport a été établi pour toutes les revendications

| Lieu de la recherche | Date d'achèvement de la recherche | Examinateur |
|---|---|---|
| LA HAYE | 30-06-1988 | VANNESTE M.A.R. |

EPO FORM 1503 03.82 (P0402)

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
    ....................................................
& : membre de la même famille, document correspondant